(19) Europäisches Patentamt
European Patent Office
Office européen des brevets

(11) EP 0 487 340 B1

(12) EUROPEAN PATENT SPECIFICATION

(45) Date of publication and mention of the grant of the patent: **14.05.1997 Bulletin 1997/20**

(51) Int. Cl.$^6$: **A23P 1/08**, A21D 13/00, A23L 1/31, A23L 1/315, A23L 1/217

(21) Application number: **91310728.0**

(22) Date of filing: **21.11.1991**

# (54) Coating for food composition limiting fat absorption upon frying

Überzugsmittel für Nährzusammensetzung, für Ölabsorbierungbegrenzung während des Braten

Enrobage pour composition alimentaire limitant l'absorption de graisse à la friture

(84) Designated Contracting States:
**BE DE ES FR GB IT NL**

(30) Priority: **21.11.1990 US 616474**

(43) Date of publication of application:
**27.05.1992 Bulletin 1992/22**

(73) Proprietor: **HERCULES INCORPORATED**
**Wilmington Delaware 19894-0001 (US)**

(72) Inventors:
- **Gerrish, Timothy C.**
  **Wilmington Delaware 19810 (US)**
- **Carosino, Lawrence E.**
  **Wilmington Delaware 19809 (US)**

(74) Representative: **Watkins, David et al**
**Urquhart-Dykes & Lord,**
**91 Wimpole Street**
**London W1M 8AH (GB)**

(56) References cited:
**EP-A- 0 048 123** **EP-A- 0 110 587**
**EP-A- 0 249 764** **EP-A- 0 392 119**
**GB-A- 1 079 628** **US-A- 2 517 595**

- **RESEARCH DISCLOSURE. vol. 06, no. 182, June 1979, HAVANT GB page 332; ALGINATE INDUSTRIES LTD: 'The setting of batter by poaching instead of frying' Abstracts No.18237, 18238**
- *** Whole abstracts ***
- **K.KULP 'batters and breadings in food processing' 1990 , AMERICAN ASSOCIATION OF CEREAL CHEMISTS, INC. , ST PAUL, MINNESOTA, USA Chap.7**
- **M.WINHOLZ 'The Merck Index, Tenth Ed.' 1983 , MERCK , RAHWAY, N.J., USA page 6922, No. 6920**
- **M.YALPANI 'Polysaccharides : Syntheses, Modifications,and Structure/Property Relations' 1988 , ELSEVIER Chap.10, pages 410-413**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 487 340 B1

## Description

The invention relates to a food composition and method for the reduction of oil in fried products. The reduction in oil retention, both absorbed and adsorbed, is accomplished by forming a dry coating including hydrocolloid and polyvalent cations on food prior to frying.

Strong, in U.S. Patent No. 3,397,993, discloses a process for preparing frozen french fry potato segments. Strong does not coat the potato segments as is provided by the present invention.

In W. L. Gold, U.S. Patent No. 3,424,591 and M. A. Meyers, U.S. Patent No. 4,900,573, potato strips are dipped in polymer solutions, drained and fat fried with the polymer layer still wet (hydrated). The coating used in the present invention is dried prior to frying.

In S. Olson, U.S. Patent No. 4,511,583, potato strips are disclosed as being dipped in polymer solutions, drained, dried and fat fried. Olson does not disclose a potato having a salt bridged gel coating as used in the present invention.

Prosise in U.S. Patent 4,917,908 discloses reduced oil french fried potato products and process for preparing by coating potato pieces with polyvinylpyrrolidone. Prosise does not disclose a potato having a salt bridged gel coating as used in the present invention.

In Research Disclosure, vol. 06, No. 182, June 1979, page 332; Abstract No. 18237, a method is disclosed for coating a food product with a batter containing a water-soluble alginate salt such as sodium alginate. The coating is set by poaching the product in a hot aqueous solution of a polyvalent metal salt such as calcium chloride, whereby the batter is set by gelatinisation of the starch component. After rinsing, drying and optionally freezing, the coated product can be fried. The coating is effective to limit the amount of oil absorbed during frying.

In British Patent No. 1079628, a process is disclosed for preparing fried potato products in which whole potato pieces are blanched, contacted with an aqueous solution of a film-forming hydrocolloid such as sodium carboxymethylcellulose or (hydroxypropyl) methylcellulose and then fried. The thus-formed film helps to reduce oil absorption by the potato products.

European Patent Application No. 0048123 discloses an algin emulsion coating obtained by treating algin emulsion with divalent or trivalent metal ions. Calcium chloride is preferred. Coatings thus-formed are thought to work as an oil barrier.

A gel is a form of matter intermediate between a solid and a liquid. It consists of polymers, or long-chain molecules, cross-linked to create a tangled network and immersed in a liquid medium. The properties of the gel depend strongly on the interaction of these two components. The liquid prevents the polymer network from collapsing into a compact mass; the network prevents the liquid from flowing away. Depending on chemical composition and other factors, gels vary in consistency from viscous fluids to fairly rigid solids, but typically they are soft and resilient or jellylike.

The equivalent weight of a substance is the weight thereof that combines, neutralizes or reacts with another substance.

Matrix foods are finely cut and then shaped. They may be cooked and/or contain additives such as flavors, binders and fillers.

There is a need in the food industry for food with less fat, cholesterol and calories. The health consciousness of consumers demands low-fat food having the gustatory attributes (flavor, texture, unguency, etc.) of high-fat food. The invention disclosed herein includes food compositions having reduced fat content while retaining the flavor, texture and color of the afore mentioned fried food products.

In accordance with a first aspect of the invention, there is provided a fried food composition with reduced oil or fat absorbed therein comprising a food at least partially coated with at least one hydrocolloid coating, characterised in that: said hydrocolloid coating is a gel coating formed by the reaction of a polyvalent cation and at least one polyvalent cation crosslinkable hydrocolloid gel-forming compound selected from the group consisting of

(a) pectin, pectinic acid, pectic acid and salts thereof, pectinates, polygalacturonates and salts thereof, carrageenan or mixtures thereof, arabic acid, gum tragacanth or mixtures thereof, gum karaya, gum arabic, gum ghatti, agar, gelatin, gellan, pullulan, curdlan, propylene glycol starch, scleroglucan or mixtures thereof, or
(b) a compound of the general formula:

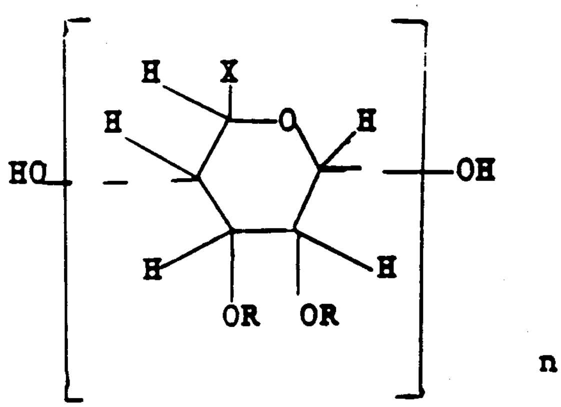

wherein

--- is an alpha (α) or a beta (β) glycosidic bond,
n is an integer from 10 to 10,000,
X is independently selected n times from

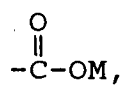, 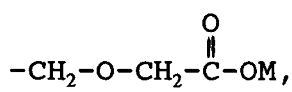, 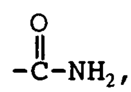,

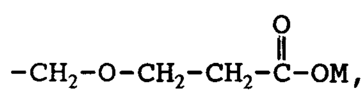, and 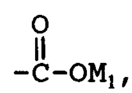,

M is H or a cation,
$M_1$ is H or methyl,
R is H, $CH_3$, $C_2H_5$-, -$(CH_2CH_2\text{-}O)_y$-H, or

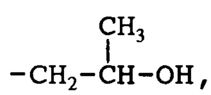,

and
y is 1 or 2,

and further characterised in that said polyvalent cations are present in an amount equal to at least 40% of the amount of cation required to neutralise the hydrocolloid in said coating, and in that the coating is dried on the food prior to frying and is a thin coating on the coated food that is fried in an oil or fat at a temperature in the range 100 to 200°C to form the at least partially coated fried food having an oil or fat content that is significantly reduced with improved organoleptic properties.

According to a second aspect, the invention is a method for preparing a fried food composition with reduced oil or fat absorption characterised in that it comprises the steps of:

(a) at least partially coating the food with at least one hydrocolloid gel coating formed by the reaction of a polyvalent cation and at least one polyvalent cation crosslinkable hydrocolloid gel-forming compound selected from the group consisting of:

(i) pectin, pectinic acid, pectic acid and salts thereof, pectinates, polygalacturonates and salts thereof, carrageenan or mixtures thereof, arabic acid, gum tragacanth or mixtures thereof, gum karaya, gum arabic, gum ghatti, agar, gelatin, gellan, pullulan, curdlan, propylene glycol starch, scleroglucan or mixtures thereof, or

(ii) a compound of the general formula:

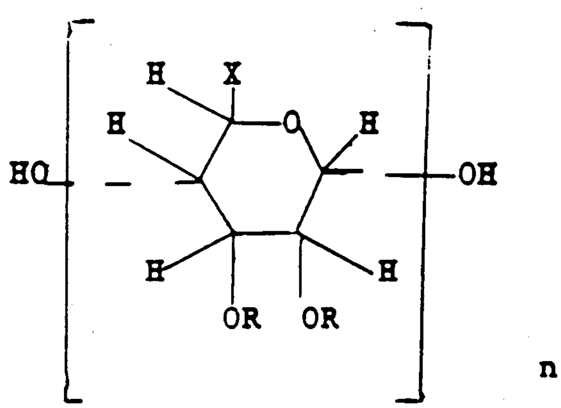

wherein

--- is an alpha (α) or a beta (β) glycosidic bond,
n is an integer from 10 to 10,000,
X is independently selected n times from

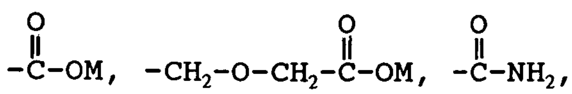

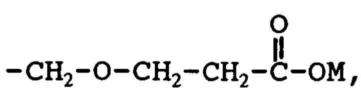 and 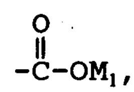

M is H or a cation,
$M_1$ is H or methyl,
R is H, $CH_3$, $C_2H_5$-, $-(CH_2-CH_2O)_y-H$, or

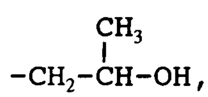

and
y is 1 or 2,

and wherein said polyvalent cations are present in an amount equal to at least 40% of the amount of cation required to neutralise the hydrocolloid in said coating;
(b) drying the coated food, and
(c) frying the dried, coated food in a cooking oil or fat at a temperature in the range 100 to 200°C to form the at least partially coated fried food having an oil or fat content that is significantly reduced with improved organoleptic properties.

Figure 1 is a schematic diagram of the general process steps used in the invention.

Figure 2 is a schematic diagram of coating process steps used in the invention.

Figure 3 is schematic cross-section side view of a coated tissue composition in accordance with the invention.

A food composition, product and method of making thereof uses tissue, such as vegetable, meat, fish, poultry, processed foods, dough-based foods, or battered foods. The tissue is coated with at least one coating, dried and fried. Initially the coating is a gel including water, hydrocolloid gel forming compounds and a cross-linking agent such as polyvalent cations. The coating at least partially encloses the outer surface of the tissue. The coating is dried prior to frying The coating (initial, dried and fried) includes at least 40 percent equivalent weight of cross-linking agent based on the neutralization equivalent weight of the hydrocolloid. The dried coating is adapted to substantially impede the penetration of oil therethrough. The coated fried products have a low concentration of cooking oil.

When this invention concerns dough-based or battered foods, the fried food product composition also has reduced oil or fat absorbed therein; the dough or batter has a reaction product of a crosslinking agent and at least one crosslinkable hydrocolloid gel forming compound having a low molecular weight applied as a coating to the dough-based food or to the battered food product prior to frying.

In accordance with the invention, tissue such as vegetable, meat, fish or poultry is coated and fried to form low fat food. The tissue is coated with hydrocolloid, dried and fried to produce a low oil product. Frying is carried out in cooking oil. As used here oil refers to oil and/or fat. The coating may be applied as a powder, or as a solution. The solvent of the solution may include water or a more volatile liquid to increase the rate of drying.

The coating includes cross-linking agents, such as polyvalent cations, for example metal ions, and at least one low molecular weight hydrocolloid gel forming compound, which forms a gel by complexing with the polyvalent ions. Examples of hydrocolloid gel forming compounds which may be used in coatings in accordance with the invention as low molecular weight, high molecular weight compounds or mixtures thereof include low methoxyl pectin, amidated low methoxyl pectin.

In addition to hydrocolloid gel forming compounds, the coating may include a film forming compound such as a high molecular weight hydrocolloid either mixed with the hydrocolloid gel forming compound or as a separate outer layer applied to the coating.

The general process steps used in the invention are shown in Figure 1. Tissue is processed by cutting 2 into desired shapes. By coating 4 the cut tissue is prepared for frying 6. In a preferred embodiment of the invention, coating includes blanching 7 with an aqueous solution containing calcium ions, applying hydrocolloid 8, and drying 9 as shown in Figure 2. Nevertheless, when dough-based or battered foods, are treated in the process of the invention, the step of blanching is not necessary.

Coated tissue 10 includes cells 12 adhered together by interstitial material 14. Coating 16 includes multivalent cations and low and high molecular weight hydrocolloids which cover cells 12 as shown in Figure 3. During frying in cooking oil, water moves out of cells 12, but oil is substantially prevented from entering cells 12 by coating 16.

The extent of penetration of the coating into the interstitial materials 14 is directly related to the blanch time, pressure and temperature. Vacuum (pressures below atmospheric) and pressures above atmospheric may be used to increase penetration of the coating. Blanching at higher temperatures and/or under a pressure gradient for longer times (but commensurate with tissue integrity) increases the extent of penetration by the coating between the cells 12.

Hydrocolloids for the coatings may be applied as a dry powder or solution of hydrocolloid. In dry powder form, the hydrocolloid hydrates with moisture on the surface of the tissue to form the gel. The solution includes water. The solution may include alcohol. During drying a continuous coating is formed, and the coated tissue is ready to be fried, par fried and frozen or frozen for later frying.

In a preferred embodiment of the invention, potato strips treated with a solution containing calcium ions to form a film are coated by soaking in a solution of low molecular weight ionic hydrocolloids. These potato strips are then coated by dipping or spraying with a solution of medium to high molecular weight synthetic or chemically modified natural hydrocolloid or other film forming material. The coatings are dried prior to deep fat frying. The invention provides for the production of french fried potatoes having up to 70% reduction in retained oil as compared to untreated potatoes.

Partial drying may be used before coating and after coating with hydrocolloid materials. Drying rates are increased by use of volatile solvents in the hydrocolloid solution. Drying of the outer tissue layer may be carried out before coating. This reduces the amount of water to be removed after a coating solution is applied. Other treatments which may be used before coating to make compositions in accordance with the present invention include: sugar dips, salt dips, pH adjustments, dehydration, heating, cooling, and agitation.

The blanch with cations is carried out using an aqueous solution having at least about 0.2 percent by weight of the cation, such as calcium. Preferably the aqueous blanch solution has from about 0.3 to 0.8 percent by weight of the cation.

Low molecular weight ionic hydrocolloid compositions provide improved processability by reducing the tendency of coated food pieces such as french fries to stick together. Use of low molecular weight ionic hydrocolloid compositions also improve processability due to increased drying rates and improve the organoleptic properties of the product such as its texture, mouth feel, bite, color and reduced shine or gloss.

Coated compositions in accordance with a preferred embodiment of the invention are formed by cutting, blanching,

coating and drying. The blanch water typically includes calcium ions. Multiple coatings may be used. These coated compositions are then fried to form coated products. The frying may be short in duration (par frying) such as from about 1 to about 60 seconds, or of long duration (to fully cook the tissue), such as from about 60 seconds to about one hour. Frying of coated compositions in accordance with the invention may be carried out from about 3 seconds to about one hour at a temperature from 100 to 200°C.

Frying is preferably carried out under substantially isothermal conditions at temperatures between 100 and 180°C for from 5 seconds to about 30 minutes. More preferably, the frying is carried out at temperatures between 100 and 170°C for from about 10 seconds to about 15 minutes.

The dry coatings of the composition in accordance with the invention may be from 0.0254 mm to 1.3mm. Preferably, these coatings are from 0.0254 mm to 0.254 mm.

Low molecular weight hydrocolloids used in coatings in accordance with the invention have preferably have a molecular weight of greater than about 200; for example from about 200 to 80,000, and more preferably from about 2000 to 50,000 but most preferably from 2000 to 30,000. Within the most preferred range low molecular weight hydrocolloids used in coatings in accordance with the invention have a molecular weight of less than about 20,000 and more preferably less than 15,000.

High molecular weight hydrocolloids used in coatings in accordance with the invention preferably have a molecular weight of more than 80,000, for example from 80,000 to about 10,000,000 and more preferably from 80,000 to 1,000,000 and most preferably from 80,000 to 200,000.

Preferably, the dried coating of the coated raw tissue composition of the invention includes less than 20 percent by weight water. More preferably, the dried coating of the coated raw tissue composition of the invention includes less than 15 percent by weight water. Most preferably the dried coating of the coated raw tissue composition of the invention includes less than 10 percent by weight water.

Preferably, the outer cell tissue layer of raw cut tissue is at least partially dried prior to coating to form a dried outer tissue layer. Preferably the concentration of water in the outer layer of dried cut tissue is from 0.1 to 80 percent of the concentration of water in raw tissue. More preferably, the concentration of water in the outer layer of dried cut tissue is from 0.1 to 50 percent of the concentration of water in raw tissue. Most preferably, the concentration of water in the outer layer of dried cut tissue is from 0.1 to 30 percent of the concentration of water in raw tissue.

Preferably, the par fried coated product in accordance with an embodiment of the invention is frozen by reducing the temperature thereof to less than 0°C to form a dried frozen food. Preferably, the frozen food is heated to at least 100°C for at least 5 seconds to form a cooked product.

Prior to drying the amount of polyvalent metal ions is at least 0.05 percent by weight in the gel coating on the raw tissue.The amount of polyvalent metal ions is at least 1.0 percent by weight in the coating of the par fried and fully fried tissue. Preferably, the concentration of polyvalent metal ions in the gel coating is more than 0.1 percent by weight. More preferably, the concentration of polyvalent metal ions in the gel coating is more than 0.2 percent by weight.

The polyvalent metal ions are present in the dry or the raw as well as the fried tissue coating in an amount of at least 40 percent equivalent weight based on the neutralization equivalent weight of the hydrocolloid compounds. Thus, at least 40 percent of the amount of polyvalent metal ions is required to neutralize the hydrocolloid compounds.

Preferably, the metal ions are present in the dry coating on the raw as well as the fried tissue in an amount of at least fifty percent equivalent weight of the neutralization equivalent weight based on the hydrocolloid compounds in the coating.

The cooked product preferably includes at least 40 percent by weight less cooking oil than said cooked control tissue. The cell tissue of the composition of the invention may include fruit, such as apples, bananas and plantain, vegetables such as potato, onion, carrots, zucchini, poultry, fish, meat or processed foods such as matrix potatoes and matrix meats.

Low molecular weight hydrocolloids may be readily prepared by either acid, alkaline or enzymatic degradation and hydrolysis of suitable precursors. In a preferred embodiment of this invention the low molecular weight hydrocolloid is derived from pectins which are a group of complex, high molecular weight polysaccharides found in plants and composed chiefly of partially methylated polygalacturonic acid units. Portions of the carboxyl group occur as methyl esters, and the remaining carboxyl groups exist in the form of the free acid or as its ammonium, potassium, or sodium salts, and in some types as the acid amide.

Pectin is produced commercially by extracting citrus peel, apple pomace, or sugar beet pulp with a hot dilute acid (pH 1.0 to 3.5, 70° to 90°c). The extract is filtered, and pectin is then precipitated from the clear extract with ethanol or isopropanol, or as the copper or aluminum salt. The acid extract is sometimes spray- or roller-dried, or it is concentrated.

Hydrocolloid gel forming compounds of the above general formula are used above in accordance with the invention as coatings to reduce the fat absorbed/adsorbed by cellular tissue fried in deep fat. Optional-treatments before coating include: sugar dips; salt dips, pH adjustments, dehydration, heating, cooling, and agitation.

Coatings are applied for example to potato cell surfaces to form compositions in accordance with the invention by dipping, spraying, extrusion, sequential multiple or dry coating such as by dusting with powdered coating compounds.

Coatings may be applied at atmospheric, high or low pressure. Coating compositions may be dried on all tissue using forced air (hot or cold), by using flash or vacuum drying to form coated compositions in accordance with the invention.

Additives which may be included in the coating compositions of weight invention include: salts (mono- and polyvalent), sugars, plasticizers (propylene glycol, glycerol, sorbitol, propylene glycol monostearate, glycerol monostearate, polyethylene glycol), inert materials (celite, cellulose, silicas); solvents such as water, ethanol, isopropanol, ethyl acetate, binary mixtures, ternary mixtures.

One other advantage of this treatment method is that the oil resistant coating allows easy removal of the adsorbed oil present on the strips after removal from the hot frying oil. Conventional shaking, hot air and/or steam stripping of this adsorbed oil results in further oil reductions.

For use in the examples below low molecular weight pectin hydrocolloid is formed from pectin by providing a 10%. high methoxyl pectin precursor slurry in 60:40 isopropanol (IPA) water. Sodium hydroxide is added to the slurry at a level of 3 equivalents/equivalent anhydrogalacturonide. After 5 days at 25°C or 2 days at 40°C, sufficient depolymerization and deesterification has occurred. The product is filtered and the filter cake resulting is washed with IPA water (60:40) to remove excess adhering alkali. The pH of the pectin cake is then adjusted with mineral acid to between 4 and 6 and is then dried. The degree of esterification of this product is less than 10%. The molecular weight, measured by the viscosity procedure of Smit and Bryant [J. Food Science, 32, 197 (1967)], ranges from 2000-20,000.

The fried products from the Control and Examples 1-32 are analyzed for oil content by extracting the fried potato strips with hexane using a Soxhlet extraction apparatus. The potato strips are diced into 3.18 mm (0.125 inch) segments, loaded into an extraction thimble and extracted with rapidly refluxing hexane for 2 hours. The oil-hexane mixture is then evaporated to a small volume using a rotary evaporator. The remaining small volume is transferred quantitatively to preweighed evaporation dishes to allow the remaining hexane to evaporate leading to a constant weight.

Control I below follows the blanching, drying and frying of U.S. Patent 3,397,993 (McDonald's), column 2, lines 15-55. Control I is compared to Examples 1-28. Example 29 freezes a par fried coated potato, Example 30 fully fries frozen par fried potato and Examples 31 and 32 apply polyvalent crosslinking ions and hydrocolloid gel forming compound in a single coating step.

Fresh Idaho russet potatoes referred to by size as Idaho 100's (100 potatoes per 50 pound box) are sliced with a manual potato slicing device which produces consistent 7.95 mm by 7.95 mm (0.313 by 0.313 inch) strips.

Twenty-five grams of strips are then washed in a large volume of cold water to remove surface starch and sugars. The washed strips are trimmed to 63.5 mm to 76.2 mm in length to form prefried strips. The strips are blanched by heating at 85°C for 8 minutes in water. The strips are then dried in a mechanical convection oven at 150°C for 10 minutes.

Strips are then fried in two (2) US gallons of oil at 170°C for three (3) minutes. [It is known that 2 US gallons = 7.57 litres]. At the completion of frying, the frying basket is removed from the oil and shaken by hand 5 seconds over the hot oil. The strips are then removed to paper towels to drain until cool. The product has 9.1 g of oil per 100 g product.

## Example 1

The potato strips are treated as in Control I but with the use of 0.5% aqueous solution of calcium chloride as blanch water. The strips are then soaked in a 5% aqueous solution of low molecular weight pectin for 5 minutes at 37°C. The strips are then dried in a convection oven at 150°C for 10 minutes.

Strips are then fried in 7.57 ltr of oil at 170°C for three (3) minutes. At the completion of frying, the frying basket is removed from the oil and shaken by hand 5 seconds over the hot oil. The strips are then removed to paper towels to drain until cool. These product strips have an oil content of 6.1 g oil per 100 g of product.

## Example 4

Fresh Idaho russet potatoes referred to by size as Idaho 100's (100 potatoes per 50 pound box) are sliced with a manual potato slicing device which produces consistent 7.95mm x 7.95 mm strip. Twenty-five grams of strips are then washed in a large volume of cold water to remove surface starch and sugars. The washed strips are timmed to 63,5 mm to 76,2 mm in length to form prefried strips. The strips are blanched by heating at 85°C for 8 minutes in a 0,5% aqueous solution of calcium chloride. The prefried potato strips are soaked in a 5% aqueous solution of pectin prepared as described above for 5 minutes at 37°C. The coated strips ate next dried with air at sufficient velocity and temperature to convert the aqueous pectin solution to a dried film. The strips ate then dipped for 8 seconds in a 1.0% aqueous solution of methylcellulose. The strips ate allowed to drain for 2 minutes. The strips ate then dried in a convection oven at 150°C for 10 minutes.

Strips treated are fried in 7.57 ℓ of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 5

The procedure of Example 4 (Prefied Section) is followed except that a 3% aqueous solution of high molecular weight (100,000), high methoxyl (50-75%, Degree of esterification) pectin is substituted for methylcellulose. Strips treated are fried in 7.57 ℓ of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 6

The procedure of Example 4 (Prefried Section) is followed except that a 3% aqueous solution of low molecular weight (20,000), high methoxyl (50-75%, Degree of esterification) pectin is substituted for methylcellulose. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 7

The procedure of Example 4 (Prefried Section) is followed except that a 3% aqueous solution of high molecular weight (100,000), low methoxyl (15-50%, Degree of esterification) pectin is substituted for methylcellulose. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 8

The procedure of Example 4 (Prefried Section) is followed except that a 3% aqueous solution of low molecular weight (20,000), low methoxyl (15-50%, Degree of esterification) pectin is substituted for methylcellulose. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 9

The procedure of Example 4 (Prefried Section) is followed except that a 3% aqueous solution of amidated pectin (Degree of amidation, 15-40%; Degree of esterification 20-40%) is substituted for methylcellulose. Strips treated are fried in two (2) gallons of oil at 170°C for three (3) minutes. At the completion of frying, the frying basket is removed from the oil and shaken by hand 5 seconds over the not oil. The strips are then removed to paper towels to drain until cool. The product strips have an oil content of about 4 g of oil per 100 g of product.

Example 10

The potato strips treated as in Example 1 (Prefried Section) except that drying is provided by partially dehydrating using air at sufficient velocity and temperature to result in about 10% by weight moisture loss. The partially dehydrated strips are soaked in a 5% aqueous solution of low molecular weight pectin for 5 minutes at 37°C. The coated strips are next dried with air at sufficient velocity and temperature to convert the aqueous low molecular weight solution to a dried film. The strips are then dipped for 8 seconds in a 1% aqueous solution of methylcellulose. The strips are allowed to drain for 2 minutes. The strips are then dried in a convection oven at 150°C for sufficient time to result in about 25% moisture weight loss.

Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 3.5 g oil per 100 g of product.

Example 13

The potato strips treated as in Control I but with the use of 0.5% aqueous solution of calcium chloride for the blanch water. The strips are then soaked in an aqueous solution mixture of low molecular weight pectin as described above (5%) and methylcellulose (1%) for 5 minutes at 37°C. The strips are then dried in a convection oven at 150°C for 10 minutes.

Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 14

The procedure of Example 13 (Prefried Section) is followed except that carrageenan having a molecular weight of about 100,000 is substituted for methylcellulose. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 15

The procedure of Example 13 (Prefried Section) is followed except that the strips are fried for one (1) minute (rather than three (3) minutes) at 170°C. At the completion of frying, the frying basket is removed from the oil and shaken by hand 5 seconds over the hot oil. The strips are then removed to paper towels to drain until cool. The product strips have an oil content of about 2.5 g oil per 100 g of product.

Example 16

The procedure of Example 13 (Prefried Section) is followed except that carrageenan having a molecular weight of about 5,000 is substituted for low molecular weight pectin. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 17

The potato strips are treated as in Control I (prefried section) but with the use of 0.5% aqueous solution of calcium chloride for the blanch water. The strips are then soaked in an aqueous solution mixture of low molecular weight pectin as described above for 5 minutes at 37°C. The coated strips are next dried with air at sufficient velocity and temperature to convert the aqueous low molecular weight solution to a dried film. The strips are then recoated with the low molecular weight pectin by soaking in a 5% aqueous solution for 5 minutes at 37°C. The strips are then dried in a convection oven at 150°C for sufficient time to result in a 10-35% moisture weight loss.

Strips are then fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 18

The procedure of Example 17 (Prefried Section) is followed except that arabic acid having a molecular weight of about 10,000 is substituted for low molecular weight pectin. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 19

The procedure of Example 17 (Prefried Section) is followed except that arabic acid having a molecular weight of about 100,000 is substituted for low molecular weight pectin. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. The product strips have an oil content of about 4 g of oil per 100 g of product.

Example 20

The procedure of Example 17 (Prefried Section) is followed except that arabic acid having a molecular weight of about 10,000 is substituted for low molecular weight pectin. Strips treated are fried in two (2) gallons of oil at 170°C for

two (2) minutes. At the completion of frying, the frying basket is removed from the oil and shaken by hand 5 seconds over the hot oil. The product strips have an oil content of about 3.5 g of oil per 100 g of product.

Example 23

The procedure of Example 4 (Prefried Section) is followed except that the low molecular weight pectin is prepared in solvent of 3 parts of ethanol and 7 parts of water rather than water alone. Strips treated are fried in two (2) gallons of oil at 170°C for three (3) minutes. At the completion of frying, the frying basket is removed from the oil and shaken by hand 5 seconds over the hot oil. The product strips have an oil content of about 4 g per 100 g of product.

Example 24

The procedure of Example 23 (Prefried Section) is followed except that the drying time is reduced to seven (7) minutes from ten (10) minutes. Strips treated are fried in two (2) gallons of oil at 170°C for three (3) minutes. At the completion of frying, the frying basket is removed from the oil and shaken by hand 5 seconds over the hot oil. The product strips have an oil content of about 4 g per 100 g of product.

Example 27

The procedure of Example 4 (Prefried Section) is followed except ethanol is substituted for water in the 5% solution. Strips treated are fried in two (2) gallons of oil at 170°C for three (3) minutes. At the completion of frying, the frying basket is removed from the oil and shaken by hand 5 seconds over the hot oil. The product strips have about 4 g of oil per 100 g of product.

Example 28

The procedure of Example 27 (Prefried Section) is followed except that drying is carried out for seven (7) minutes rather than ten (10) minutes. Strips treated are fried in two (2) gallons of oil at 170°C for three (3) minutes. At the completion of frying, the frying basket is removed from the oil and shaken by hand 5 seconds over the hot oil. The product strips have about 4 g of oil per 100 g of product.

As shown in Table 1, significant reductions in oil retention are obtained using dried coatings of low and high molecular weight hydrocolloids. These hydrocolloids are representative of those in the general formula.

Examples 29 and 30 below are illustrative of the use of par frying and freezing in forming the compositions of the invention.

Example 29

The potato strips treated as in Control I (prefried section) but with the use of 0.5% aqueous solution of calcium chloride as blanch water. The strips are then are soaked in a 5% aqueous solution of low molecular weight pectin for 5 minutes at 37°C. The strips are then dried in a convection oven at 150°C for 10 minutes. The strips are then par fried in 2 gallons of oil at 170°C for 45 seconds. The strips are then frozen. These product strips have an oil content of about 2 g oil per 100 g of product.

Example 30

The potato strips treated as in Example 29 are fried in two (2) gallons of oil at 170°C for three (3) minutes. At the completion of frying, the frying basket is removed from the oil and shaken by hand 2.5 seconds over the hot oil. The strips are then removed to paper towels to drain until cool. These product strips have an oil content of about 5 g oil per 100 g of product.

Example 31

The potato strips treated as in Control I (prefried) except for blanching, are soaked in a 5% aqueous solution of low molecular weight pectin and 0.3% calcium for 6 minutes at 85°C. Strips treated are fried in two (2) gallons of oil at 170°C for three (3) minutes. At the completion of frying, the frying basket is removed from the oil and shaken by hand 5 seconds over the hot oil. The strips are then removed to paper towels to drain until cool. These product strips have an oil content of about 5 g oil per 100 g of product.

Example 32

The potato strips are treated as in Control I (prefried section) but with the use of 0.5% aqueous solution of calcium chloride as blanch water. The strips then are soaked in a 5% aqueous solution of low molecular weight pectin for 5 minutes at 37°C. The strips are then soaked in a 5% aqueous solution of high molecular weight methylcellulose for 2 minutes at 37°C. The strips are then dried in a convection oven at 150°C for 10 minutes. The strips are then par fried in 7.57 ℓ of oil at 170°C for 45 seconds. The strips are then shaken and steam stripped for 1 minute. The strips are then frozen. These product strips have an oil content of about 1.5 g oil per 100 g of product.

Example 33

Fresh skinless chicken breasts (Country Pride brand), obtained from a local market were cut into rectangular pieces of ca. 25.4 mm x 76.2 mm dimensions. Three pieces of cut chicken were used for each experiment using the following bench scale procedure:

(a.) No fat holdout treatment (CONTROL) three pieces of chicken breast (ave. wt. 9.84 g.) were first dipped into flour (Gold Medal brand, all purpose flour, General Mills Co.); this was to assist in wet batter pickup; on average these pieces of floured covered chicken gained 0.63 g. (6.1%). The flour covered pieces were then dipped into a batter mix of the following composition:

i) 208g. Modern Maid Batter Mix No. 204-4277 (product of Modern Maid Food Products, Inc., Uniondale, N.Y.)
ii) 192g. of distilled water (batter solids were 52% by weight).

The batter-coated chicken pieces (ave. weight increase 7.3g., 40.9%) were subjected to a surface drying in a forced air oven at 150°C. for 2 minutes. The partially dried pieces were then deep fat fried at 170°C. for 3 minutes in 2 gallons of cooking oil (Crystal brand; partially dried pieces were then deep fat fried at 170°C. for 3 minutes in 2 gallons of cooking oil (Crystal brand; partially hydrogenated soybean oil product of Beatrice/Hunt-Wesson Inc., Fullerton CA.). The frying operation was performed in a Star fryer, model No. 115D, Star Manufacturing Co., St. Louis, MO.

The fried pieces were allowed to cool to room temperature in air and were then refrigerated prior to fat analysis. For analytical purposes, the coating was removed by hand stripping from each piece and divided into two portions which were then analyzed by means of a CEM 80 microwave oven system for moisture content and then a CEM-FES 80 fat extraction apparatus (CEM Corporation, Matthews, NC.). Fat is extracted from the sample in this system by methylene chloride which is then volatilized leaving behind the residual oil which is weighed; the fat content is then calculated from the known initial sample weight. The fat contents of the three pieces used in this experiment (two determinations per piece) ranged from 6.0% to 8.1%, average fat content 7.4%. Subsequent treatments were compared to this value and fat reductions were calculated using the formula:

$$\%\text{ fat reduction} = \frac{7.4 - \text{ave }\%\text{ fat of treatment}}{7.4} \text{ X } 100$$

(b) Dipping of battered chicken into preformed calcium pectate

Three pieces of chicken (ave. wt. 9.96g ) were floured as in (a.) above (ave. wt. increase 0.74g, 7.0%). The pieces were oven dried for 2 minutes at 150°C. The samples were each then dipped into an aqueous suspension prepared by mixing 100g. of a 0.5 wt. % solution of $CaCl_2$ in water with 100g. of a 4 wt.% pectin solution (sodium salt, MW 12,000, DE 4%). The chicken pieces remained in contact with the calcium pectate mixture for ten seconds before being removed (ave. wt. increase 0.72g., 4%). These were then subjected to drying at 150°C. for 2 minutes. The samples were deep fried at 170°C. for 3 minutes, then cooled and submitted for analysis as in (a). The average fat content measured was 5.66%, ave. fat reduction 23.8%.

Example 34

Commercial egg roll wrapper dough (Oriental Mascot Brand, super thin extra crisp) was cut into 101.6 mm x 101.6 mm squares These were rolled into cylinders; the ends were folded over, pasted with moistened flour and pinched shut.

Untreated controls six dough cylinders (ave. wt. 11.62g.) were deep fat fried for 90 seconds at 170°C. Frying was carried out individually in 7.57 ℓ of oil (Crystal brand, hydrogenated soybean oil, Beatrice/Hunt-Wesson Inc., Fullerton, CA.) in a Star Model 115 D Fryer (Star Manufacturing Co., St. Louis, MO.) The fried pieces were cooled in air to room

temperature and regrigerated prior to analysis for fat content. Final average weight was 12.59g. Fat contents were determined with the same instrument and procedure described in Example 33. The average fat content of these six samples was 25.3% by weight (samples ranged from 22.2-27.6%). The fat reduction of subsequent experiments was calculated from the formula:

$$\% \text{ fat reduction} = \frac{25.3 - \text{ave.\% fat content of treatment}}{25.3} \times 100$$

(a) Sequential dipping: calcium treatment followed by sodium pectate of low molecular weight. No intermediate drying.

Four dough cylinders (ave. wt. 11.04g.) were individually dipped into 0.5 wt.% $CaCl_2$ solution for 10 seconds (ave. wet wt. 18.5g); then they were dipped into a 4 wt.%. low molecular weight pectin solution (sodium salt, MW 12,000 DE 4%), also for 10 seconds and allowed to drip dry for 30 seconds (ave. final wt. 22.11g). Then the dough pieces were deep fat fried for 90 seconds at 170°C. The final average weight of these pieces was 18.69g. Analyses of these fried dough cylinders as described above yielded an average fat content of 12.25% (range of samples was 10.3-17.3%). This calculates to a reduction of 51.6% relative to the control.

(b) Sequential dipping: calcium treatment followed by sodium pectate of low molecular weight. with intermediate drying.

Four dough cylinders (ave. wt. 10.62g.) were individually dipped into 0.5 wt. % $CaCl_2$ solution for 10 seconds (ave. wet wt. 18.10g.). The wet cylinders were placed in a forced air oven at 150°C. for 30 seconds (ave. dried wt. 17.61g.). The dough was then dipped for 10 seconds into a 4% low molecular weight pectin solution (sodium salt, MW 12,000, DE 4%). The average wet wt. was 22.04g. The samples were once again dried for 30 seconds in the 150°C. oven and then deep fat fried for 90 seconds at 170°C. The average final fry weight was 18.5g. The average fat content was determined to be 13.0% amounting to a fat reduction of 48.6% which is virtually the same as that of treatment (a). The intermediate drying therefore had virtually no effect upon the ultimate fat content.

(c) Sequential dipping: calcium treatment followed by sodium pectate of intermediate molecular weight.

Four dough cylinders (ave. wt. 10.70g.) were individually dipped into 0.5 wt. % $CaCl_2$ solution for 10 seconds; the average weight was 16.86g. The cylinders were then dipped into a 1% (by wt.) solution of intermediate molecular weight pectin (sodium salt, MW 31,000, DE 1.5%) for 10 seconds. The dough pieces were allowed to drip dry for 30 seconds (ave. wet wt. 20.0g), then were deep fat fried for 90 seconds at 170°C. The average final fry weight was 17.78g. The average fat content of these pieces was found to be 6.6% (range of samples was 4.7-9.0%) which calculates to an aerage fat reduction of 73.9%.

(d) Sequential dipping: calcium treatment followed by sodium pectate of intermediate molecular weight: with intermediate drying.

Four dough cylinders (ave. wt. 11.06g.) were individually dipped into 0.5 wt.% $CaCl_2$ solution for 10 seconds (ave. wet. wt. 18.15g). The wet dough cylinders were placed in a forced air oven at 150°C. for 30 seconds (ave. dried wt. 17.68g), then dipped for 10 seconds into a 1% (by wt.) solution of intermediate molecular weight pectin (sodium salt, MW 31,000, DE 1.5%) to yield dough cylinders of ave. wet wt. 22.54g. Drying of these at 150°C. for 30 seconds reduced this ave. wt. to 22.02g. Deep fat frying for 90 seconds at 170°C. yielded an average final fried weight of 19.95g. The average fat content of these was 6.6% (range of samples was 4.0-8.8%) which calculates to an average fat reduction of 73.9%. This is identical to that in (c.) above. The intermediate (31,000) molecular weight sodium pectate-calcium combination is more effective that the 12,000 MW combination.

TABLE 1

| OIL REDUCTIONS | |
|---|---|
| EXAMPLE NO. | % REDUCTION |
| I (Control) | -- |
| 1 | 33 |
| 4 | 56 |
| 5 | 56 |
| 6 | 56 |
| 7 | 56 |
| 8 | 56 |
| 9 | 56 |
| 10 | 62 |
| 13 | 56 |
| 14 | 56 |
| 15 | 73 |
| 16 | 56 |
| 17 | 56 |
| 18 | 56 |
| 19 | 56 |
| 20 | 62 |
| 23 | 56 |
| 24 | 56 |
| 27 | 56 |
| 28 | 56 |
| 29 | 78 |
| 30 | 45 |
| 31 | 45 |
| 32 | 84 |

## Claims

**1.** A fried food composition with reduced oil or fat absorbed therein comprising a food at least partially coated with at least one hydrocolloid coating, characterised in that: said hydrocolloid coating is a gel coating formed by the reaction of a polyvalent cation and at least one polyvalent cation crosslinkable hydrocolloid gel-forming compound selected from the group consisting of

(a) pectin, pectinic acid, pectic acid and salts thereof, pectinates, polygalacturonates and salts thereof, carrageenan or mixtures thereof, arabic acid, gum tragacanth or mixtures thereof, gum karaya, gum arabic, gum ghatti, agar, gelatin, gellan, pullulan, curdlan, propylene glycol starch, scleroglucan or mixtures thereof, or
(b) a compound of the general formula:

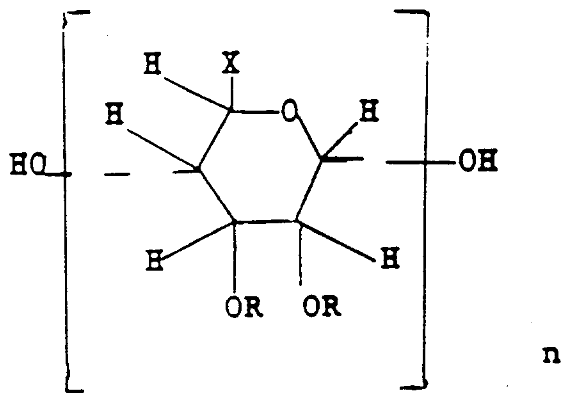

wherein

--- is an alpha (α) or a beta (β) glycosidic bond,
n is an integer from 10 to 10,000,
X is independently selected n times from

$$-\overset{O}{\overset{\|}{C}}-OM,\quad -CH_2-O-CH_2-\overset{O}{\overset{\|}{C}}-OM,\quad -\overset{O}{\overset{\|}{C}}-NH_2,$$

$$-CH_2-O-CH_2-CH_2-\overset{O}{\overset{\|}{C}}-OM,\ \text{and}\ -\overset{O}{\overset{\|}{C}}-OM_1,$$

M is H or a cation,
$M_1$ is H or methyl,
R is H, $CH_3$, $C_2H_5$-, -$(CH_2$-$CH_2$-$O)_y$-H, or

$$-CH_2-\overset{CH_3}{\overset{|}{C}}H-OH,$$

and
y is 1 or 2,

and further characterized in that said polyvalent cations are present in an amount equal to at least 40% of the amount of cation required to neutralise the hydrocolloid in said coating, and in that the coating is dried on the food prior to frying and is a thin coating on the coated food that is fried in an oil or fat at a temperature in the range 100 to 200°C to form the at least partially coated fried food having an oil or fat content that is significantly reduced with improved organoleptic properties.

2. A fried food composition as claimed in claim 1 further characterised in that said food is comprised of cell tissue selected from fruits, vegetables, poultry, fish and meat.

3. A fried food composition as claimed in claim 1 further characterised in that said food is comprised of dough based foods or battered foods.

4. A fried food composition as claimed in claim 1 further characterised in that said hydrocolloid gel-forming compound is pectin.

5. A fried food composition as claimed in any one of claims 1 to 4 further characterised in that a portion of said hydrocolloid gel-forming compounds have a low molecular weight between 2 000 and 50 000, and a portion of said hydrocolloid gel-forming compounds have a high molecular weight greater than 80 000.

6. A fried food composition as claimed in claim 2 further characterised in that said tissue is a cut portion of cell tissue having an outer layer of cells wherein said outer layer of cells comprise at least 50 percent of the concentration of water of said tissue prior to cutting, said coating comprising less than 10 percent by weight water and at least 90 percent by weight of said hydrocolloid gel-forming compounds.

7. A fried food composition as claimed in any preceding claim further characterized in that said coating is applied by contacting said food with said coating at least twice.

8. A fried food composition as claimed in any preceding claim further characterized in that said polyvalent cation comprises calcium or iron.

9. A method for preparing a fried food composition with reduced oil or fat absorption characterized in that it comprises the steps of:

(a) at least partially coating the food with at least one hydrocolloid gel coating formed by the reaction of a polyvalent cation and at least one polyvalent cation crosslinkable hydrocolloid gel-forming compound selected from the group consisting of:

(i) pectin, pectinic acid, pectic acid and salts thereof, pectinates, polygalacturonates and salts thereof, carrageenan or mixtures thereof, arabic acid, gum tragacanth or mixtures thereof, gum karaya, gum arabic, gum ghatti, agar, gelatin, gellan, pullulan, curdlan, propylene glycol starch, scleroglucan or mixtures thereof, or
(ii) a compound of the general formula:

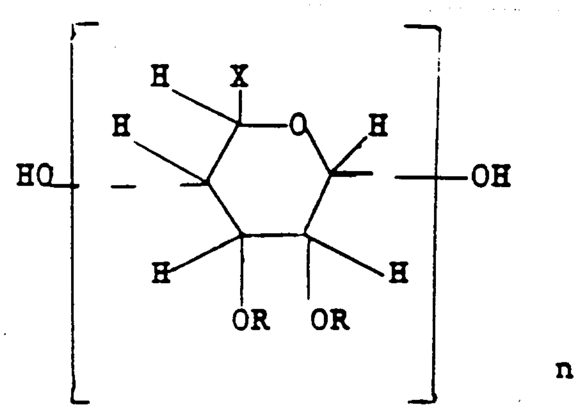

wherein

--- is an alpha ($\alpha$) or a beta ($\beta$) glycosidic bond,
n is an integer from 10 to 10,000,
X is independently selected n times from

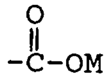, 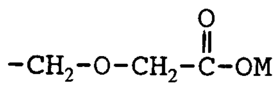, 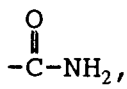,

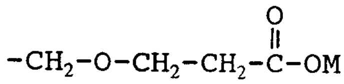, and 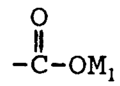,

M is H or a cation,
$M_1$ is H or methyl,
R is H, $CH_3$, $C_2H_5$-, -$(CH_2$-$CH_2$-$O)_y$-H, or

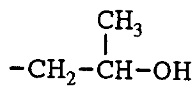,

and
y is 1 or 2,

and wherein said polyvalent cations are present in an amount equal to at least 40% of the amount of cation required to neutralize the hydrocolloid in said coating;
(b) drying the coated food, and
(c) frying the dried, coated food in a cooking oil or fat at a temperature in the range 100 to 200°C to form the at least partially coated fried food having an oil or fat content that is significantly reduced with improved organoleptic properties.

10. A method for preparing a fried food composition as claimed in claim 9 further characterised in that an additional step is carried out prior to step (a), said additional step comprising blanching the food in an aqueous solution containing at least 0.05% by weight of an edible polyvalent cation.

11. A method for preparing a fried food composition as claimed in claim 9 or claim 10 further characterised in that a portion of said hydrocolloid gel-forming compounds having a low molecular weight between 2 000 and 50 000 is applied to form said coating before applying a portion of said hydrocolloid gel-forming compounds having a high molecular weight greater than 80 000.

12. A method for preparing a fried food composition as claimed in any one of claims 9 to 11 further characterised in that said food is cut up and dried before application of the coating.

13. A method for preparing a fried food composition as claimed in any one of claims 9 to 12 further characterised in that said food has oil on an outer surface thereof, and wherein said oil is substantially removed from said product by conveying warm gas against said outer surface.

14. A method for preparing a fried food composition as claimed in any one of claims 9 to 13 further characterised in that the coating step (a) is carried out at least twice.

**Patentansprüche**

1. Gebratene Nahrungsmittelzusammensetzung mit darin absorbiertem verringertem Öl oder Fett enthaltend ein zumindest teilweise mit zumindest einer hydrocolloidalen Beschichtung beschichtetes Nahrungsmittel,
**dadurch gekennzeichnet, daß**
die hydrocolloidale Beschichtung eine durch die Umsetzung eines polyvalenten Kations und zumindest einer aus

a) Pectin, pectinige Säure, Pectinsäure und deren Salze, Pectinate, Polygalcturonate und deren Salze, Carrageen oder deren Mischungen, Arabinsäure, Tragantgummi oder deren Mischungen, Karayagummi, Gummiarabicum, Ghattigummi, Agar, Gelatine, Gellan, Pullulan, Curdlan, Propylenglycolstärke, Scleroglucan oder

deren Mischungen oder

b) eine Verbindung der allgemeinen Formel

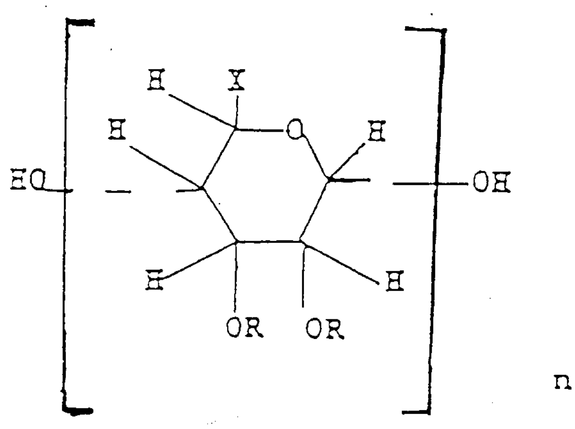

worin

--- eine Alpha (α) oder eine Beta (β)-glycosidische Bindung,
n eine ganze Zahl von 10 bis 10.000,
X unabhängig n-fach ausgewählt aus

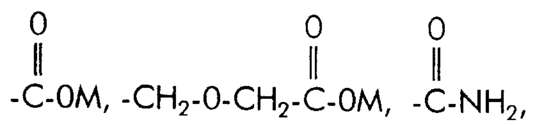

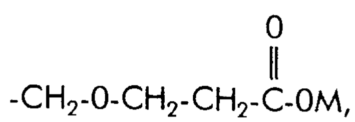 und 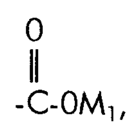

M H oder ein Kation,
$M_1$ H oder Methyl,
R H, $CH_3$, $C_2H_5$-, -($CH_2$ -$CH_2$-O)$_y$-H oder

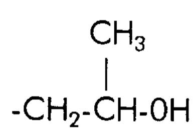

und
y 1 oder 2 sind,

ausgewählten mit einem polyvalenten Kation quervernetzbaren hydrocolloidales Gel bildenden Venbindung und weiter dadurch gekennzeichnet, daß die polvalenten Kationen in einer Menge zu zumindest gleich 40% der Menge der erforderlichen Kationen vorliegen, um das Hydrocolloid in der Beschichtung zu neutralisieren, und dadurch, daß die Beschichtung auf dem Nahrungsmittel vor dem Braten getrocknet wird und eine dünne Beschichtung auf

dem Nahrungsmittel ist, das in einem Öl oder Fett bei einer Temperatur im Bereich von 100 bis 200°C gebraten wird, um zumindest ein teilweise beschichtetes gebratenes Nahrungsmittel mit verbesserten sensorischen Eigenschaften mit einem Öl- oder Fettgehalt zu bilden, der signifikant reduziert ist.

**2.** Gebratene Nahrungsmittelzsuammensetzung nach Anspruch 1, weiter
**dadurch gekennzeichnet, daß**
das Nahrungsmittel aus Früchten, Gemüse, Geflügel, Fisch und Fleisch ausgewählten Zellgeweben besteht.

**3.** Gebratene Nahrungsmittelzusammensetzung nach Anspruch 1, weiter
**dadurch gekennzeichnet, daß**
das Nahrungsmittel aus auf Teig basierenden Nahrungsmitteln oder Eierteignahrungsmitteln besteht.

**4.** Gebratene Nahrungsmittelzusammensetzung nach Anspruch 1, weiter
**dadurch gekennzeichnet, daß**
die das hydrocolloidale Gel bildende Verbindung Pectin ist.

**5.** Gebratene Nahrungsmittelzusammensetzung nach einem der vorhergehenden Ansprüche 1 bis 4, weiter
**dadurch gekennzeichnet, daß**
ein Anteil der das hydrocolloidale Gel bildenden Verbindungen ein niederes Molekulargewicht zwischen 2.000 und 50.000 und ein Anteil der das hydrocolloidale Gel bildenden Verbindungen ein hohes Molekulargewicht von mehr als 80.000 hat.

**6.** Gebratene Nahrungsmittelzusammensetzung nach Anspruch 2, weiter
**dadurch gekennzeichnet, daß**
das Gewebe ein geschnittener Bereich eines Zellgewebes mit einer Außenschicht von Zellen ist, worin die Außenschicht der Zellen zumindest 50% der Wasserkonzentration des Gewebes vor dem Schneiden enthält, wobei die Beschichtung weniger als 10 Gew.-% Wasser und zumindest 90 Gew.-% der das hydrocolloidale Gel bildenden Verbindungen enthält.

**7.** Gebratene Nahrungsmittelzusammensetzung nach einem der vorhergehenden Ansprüche, weiter
**dadurch gekennzeichnet, daß**
die Beschichtung durch zumindest zweimaliges Inkontaktbringen des Nahrungsmittels mit der Beschichtung aufgebracht ist.

**8.** Gebratene Nahrungsmittelzusammensetzung nach einem der vorhergehenden Ansprüche, weiter
**dadurch gekennzeichnet, daß**
das polyvalente Kation Calcium oder Eisen umfaßt.

**9.** Verfahren zum Herstellen einer gebratenen Nahrungsmittelzusammensetzung mit verringerter Öl- oder Fett-Absorption,
**gekennzeichnet durch**
die Schritte:

a) zumindest teilweise Beschichtung des Nahrungsmittels mit zumindest einer hydrocolloidalen Gel-Beschichtung, die durch die Umsetzung eines polyvalenten Kations und zumindest einer aus

i) Pectin, pectinige Säure, Pectinsäure und deren Salze, Pectinate, Polygalcturonate und deren Salze, Carrageen oder deren Mischungen, Arabinsäure, Tragantgummi oder deren Mischungen, Karayagummi, Gummiarabicum, Ghattigummi, Agar, Gelatine, Gellan, Pullulan, Curdlan, Propylenglycolstärke, Scleroglucan oder deren Mischungen oder
ii) einer Verbindung der allgemeinen Formel

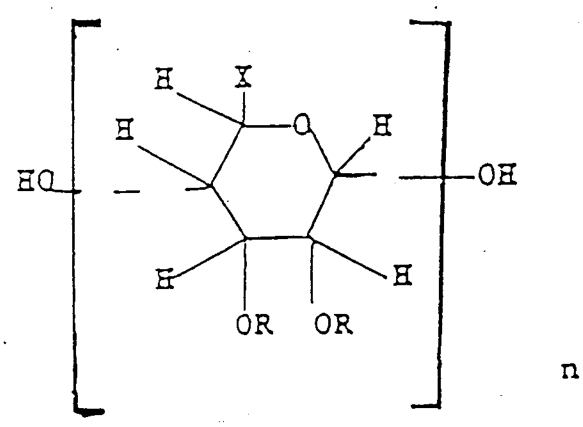

worin

--- eine Alpha (α) oder eine Beta (β)-glycosidische Bindung,
n eine ganze Zahl von 10 bis 10.000,
X unabhängig n-fach ausgewählt aus

$$-\overset{O}{\overset{\|}{C}}-OM,\ -CH_2-O-CH_2-\overset{O}{\overset{\|}{C}}-OM,\ -\overset{O}{\overset{\|}{C}}-NH_2,$$

$$-CH_2-O-CH_2-CH_2-\overset{O}{\overset{\|}{C}}-OM,\ \text{and}\ -\overset{O}{\overset{\|}{C}}-OM_1,$$

M H oder ein Kation,
$M_1$ H oder Methyl,
R H, $CH_3$, $C_2H_5$-, $-(CH_2-CH_2-O]_y-H$ oder

$$-CH_2-\overset{CH_3}{\overset{|}{C}}H-OH$$

und
y 1 oder 2 sind,

ausgewählten mit einem polyvalenten Kation quervernetzbaren ein hydrocolloidales Gel bildenden Verbindung und worin die polyvalenten Kationen in einer Menge von zumindest gleich 40% der Menge der erforderlichen Kationen vorliegen, um das Hydrocolloid in der Beschichtung zu neutralisieren,
(b) Trocknen des beschichteten Nahrungsmittels und
(c) Braten des getrockneten, beschichteten Nahrungsmittels in einem Kochöl oder -fett bei einer Temperatur im Bereich von 100 bis 200°C, um das zumindest teilweise beschichtete gebratene Nahrungsmittel mit verbesserten sensorischen Eigenschaften mit einem Öl- oder Fettgehalt zu bilden, der signifikant reduziert ist.

10. Verfahren zum Herstellen einer gebratenen Nahrungsmittelzusammensetzung nach Anspruch 9, weiter
**dadurch gekennzeichnet, daß**
ein zusätzlicher Schritt vor dem Schritt (a) durchgeführt wird, wobei der zusätzliche Schritt das Blanchieren des Nahrungsmittels in einer zumindest 0,05 Gew.-% eines eßbaren polyvalenten Kations enthaltenden wässerigen Lösung umfaßt.

11. Verfahren zum Herstellen einer gebratenen Nahrungsmittelzusammensetzung nach Anspruch 9 oder Anspruch 10, weiter
**dadurch gekennzeichnet, daß**
ein Anteil der das hydrocolloidale Gele bildenden Verbindung mit einem niederen Molekulargewicht zwischen 2.000 und 50.000 aufgebracht wird, um die Beschichtung zu bilden, bevor ein Anteil der das hydrocolloidale Gel bildenden Verbindungen mit einem Molekulargewicht von mehr als 80.000 aufgebracht wird.

12. Verfahren zum Herstellen einer gebratenen Nahrungsmittelzusammensetzung nach einem der Ansprüche 9 bis 11, weiter
**dadurch gekennzeichnet, daß**
das Nahrungsmittel vor dem Aufbringen der Beschichtung geschnitten und getrocknet wird.

13. Verfahren zum Herstellen einer gebratenen Nahrungsmittelzusammensetzung nach einem der Ansprüche 9 bis 12, weiter
**dadurch gekennzeichnet, daß**
das Nahrungsmittel Öl auf einer seiner Außenoberflächen aufweist und das Öl im wesentlichen von diesem Erzeugnis durch Zuführung eines warmen Gases gegen diese Außenoberfläche im entfernt wird.

14. Verfahren zum Herstellen einer gebratenen Nahrungsmittelzusammensetzung nach einem der Ansprüche 9 bis 13, weiter
**dadurch gekennzeichnet, daß**
der Beschichtungsschritt (a) zumindest zweimal durchgeführt wird.

## Revendications

1. Composition alimentaire frite contenant une quantité réduite d'huile ou de graisse absorbée, comprenant un aliment au moins partiellement enrobé avec au moins un enrobage hydrocolloïdal, caractérisée en ce que : ledit enrobage hydrocolloïdal est un enrobage gélifié, formé par la réaction d'un cation polyvalent et d'au moins un composé formant gel hydrocolloïdal susceptible de se réticuler avec un cation polyvalent, choisi parmi le groupe constitué de :

(a) la pectine, l'acide pectinique, l'acide pectique et des sels de celui-ci, les pectinates, les polygalacturonates et des sels de ceux-ci, le carraghénane ou des mélanges de celui-ci, l'acide arabique, la gomme adragante ou des mélanges de celle-ci, la gomme karaya, la gomme arabique, la gomme ghatti, l'agar, la gélatine, la gellane, la pullulane, la curdlane, l'amidon de propylèneglycol, la scléroglucane ou des mélanges de celle-ci, ou
(b) un composé de formule générale :

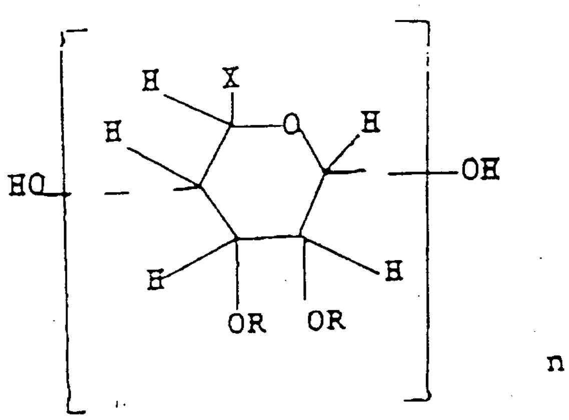

dans laquelle

--- est une liaison glucosidique alpha (α) ou bêta (β),
n est un nombre entier de 10 à 10.000,
X est choisi indépendamment n fois parmi

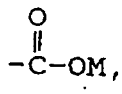 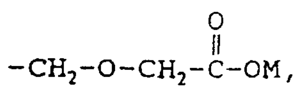 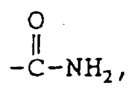

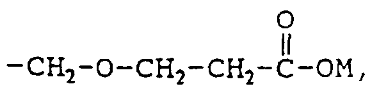 et 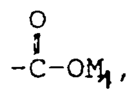

M est H ou un cation,
$M_1$ est H ou méthyle,
R est H, $CH_3$, $C_2H_5$-, $-(CH_2-CH_2-O)_y-H$, ou

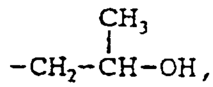

et
y est 1 ou 2,

et caractérisée en outre en ce que lesdits cations polyvalents sont présents selon une quantité égale à au moins 40% de la quantité de cation requise pour neutraliser l'hydrocolloïde dans ledit enrobage, et en ce que l'enrobage est séché sur l'aliment avant la friture et est un mince enrobage sur l'aliment enrobé qui est frit dans une huile ou graisse à une température dans la gamme de 100 à 200°C pour former l'aliment frit au moins partiellement enrobé ayant une teneur en huile ou graisse qui est réduite de façon significative, avec des propriétés organoleptiques améliorées.

2. Composition alimentaire frite telle que revendiquée dans la revendication 1, caractérisée en outre en ce que ledit aliment est composé de tissu cellulaire choisi parmi des fruits, des légumes, de la volaille, du poisson et de la viande.

3. Composition alimentaire frite telle que revendiquée dans la revendication 1, caractérisée en outre en ce que ledit aliment est composé d'aliments à base de pâte ou d'aliments enrobés de pâte à frire.

4. Composition alimentaire frite telle que revendiquée dans la revendication 1, caractérisée en outre en ce que ledit composé formant gel hydrocolloïdal est de la pectine.

5. Composition alimentaire frite telle que revendiquée dans l'une quelconque des revendications 1 à 4, caractérisée en outre en ce qu'une portion desdits composés formant gel hydrocolloïdal ont un poids moléculaire faible entre 2.000 et 50.000, et une portion desdits composés formant gel hydrocolloïdal ont un poids moléculaire élevé supérieur à 80.000.

6. Composition alimentaire frite telle que revendiquée dans la revendication 2, caractérisée en outre en ce que ledit tissu est une portion découpée de tissu cellulaire ayant une couche extérieure de cellules, dans laquelle ladite couche extérieure de cellules comprend au moins 50 pour-cent de la concentration d'eau dudit tissu avant le découpage, ledit enrobage comprenant moins de 10 pour-cent en poids d'eau et au moins 90 pour-cent en poids desdits composés formant gel hydrocolloïdal.

7. Composition alimentaire frite telle que revendiquée dans l'une quelconque des revendications précédentes, caractérisée en outre en ce que ledit enrobage est appliqué en mettant en contact ledit aliment avec ledit enrobage au moins deux fois.

8. Composition alimentaire frite telle que revendiquée dans l'une quelconque des revendications précédentes, caractérisée en outre en ce que ledit cation polyvalent comprend du calcium ou du fer.

9. Procédé de préparation d'une composition alimentaire frite avec une absorption réduite d'huile ou de graisse, caractérisé en ce qu'il comprend les étapes consistant à :

(a) enrober l'aliment au moins partiellement avec au moins un enrobage de gel hydrocolloïdal formé par la réaction d'un cation polyvalent et d'au moins un composé formant gel hydrocolloïdal susceptible de se réticuler avec un cation polyvalent, choisi parmi le groupe constitué de :

(i) la pectine, l'acide pectinique, l'acide pectique et des sels de celui-ci, les pectinates, les polygalacturonates et des sels de ceux-ci, le carraghénane ou des mélanges de celui-ci, l'acide arabique, la gomme adragante ou des mélanges de celle-ci, la gomme karaya, la gomme arabique, la gomme ghatti, l'agar, la gélatine, la gellane, la pullulane, la curdlane, l'amidon de propylèneglycol, la scléroglucane ou des mélanges de celle-ci, ou
(ii) un composé de formule générale :

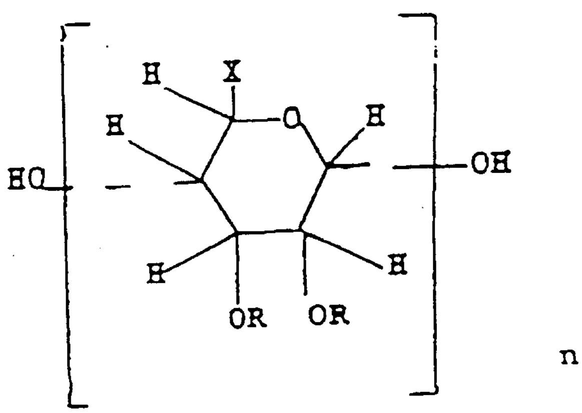

dans laquelle

--- est une liaison glucosidique alpha (α) ou bêta (β),
n est un nombre entier de 10 à 10.000,
X est choisi indépendamment n fois parmi

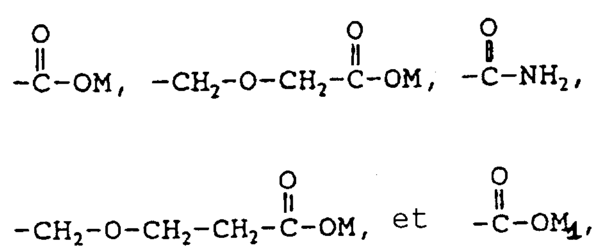

et

M est H ou un cation,
$M_1$ est H ou méthyle,

R est H, $CH_3$, $C_2H_5$-, -$(CH_2$-$CH_2$-$O)_y$-H, ou

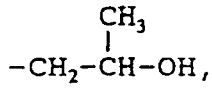

et

y est 1 ou 2,

et dans laquelle, lesdits cations polyvalents sont présents selon une quantité égale à au moins 40% de la quantité de cation requise pour neutraliser l'hydrocolloïde dans ledit enrobage ;

(b) sécher l'aliment enrobé, et

(c) faire frire l'aliment enrobé, séché, dans une huile ou graisse de cuisson, à une température dans la gamme de 100 à 200°C, pour former l'aliment frit au moins partiellement enrobé ayant une teneur en huile ou graisse qui est réduite de façon significative, avec des propriétés organoleptiques améliorées.

**10.** Procédé de préparation d'une composition alimentaire frite tel que revendiqué dans la revendication 9, caractérisé en outre en ce qu'une étape supplémentaire est effectuée avant l'étape (a), ladite étape supplémentaire comprenant le blanchiment de l'aliment dans une solution aqueuse contenant au moins 0,05% en poids d'un cation polyvalent comestible.

**11.** Procédé de préparation d'une composition alimentaire frite tel que revendiqué dans la revendication 9 ou dans la revendication 10, caractérisé en outre en ce qu'une portion desdits composés formant gel hydrocolloïdal ayant un poids moléculaire faible entre 2.000 et 50.000 est appliquée pour former ledit enrobage avant d'appliquer une portion desdits composés formant gel hydrocolloïdal ayant un poids moléculaire élevé supérieur à 80.000.

**12.** Procédé de préparation d'une composition alimentaire frite tel que revendiqué dans l'une quelconque des revendications 9 à 11, caractérisé en outre en ce que ledit aliment est découpé et séché avant l'application de l'enrobage.

**13.** Procédé de préparation d'une composition alimentaire frite tel que revendiqué dans l'une quelconque des revendications 9 à 12, caractérisé en outre en ce que ledit aliment possède de l'huile sur une surface extérieure de celui-ci, et dans lequel ladite huile est essentiellement éliminée dudit produit en amenant du gaz chaud au contact de ladite surface extérieure.

**14.** Procédé de préparation d'une composition alimentaire frite tel que revendiqué dans l'une quelconque des revendications 9 à 13, caractérisé en outre en ce que l'étape d'enrobage (a) est effectuée au moins deux fois.

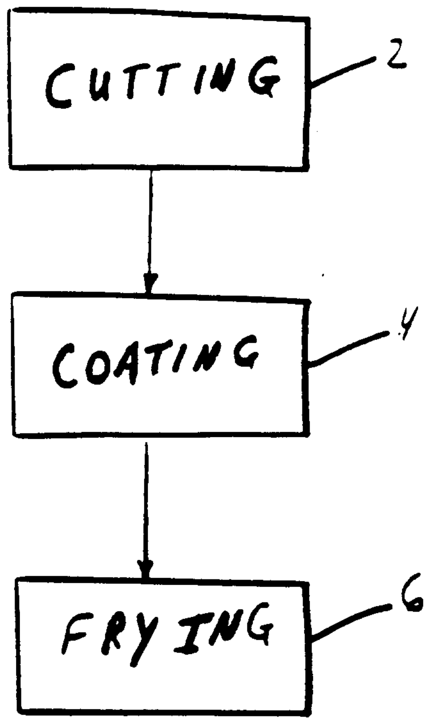


FIG. 1

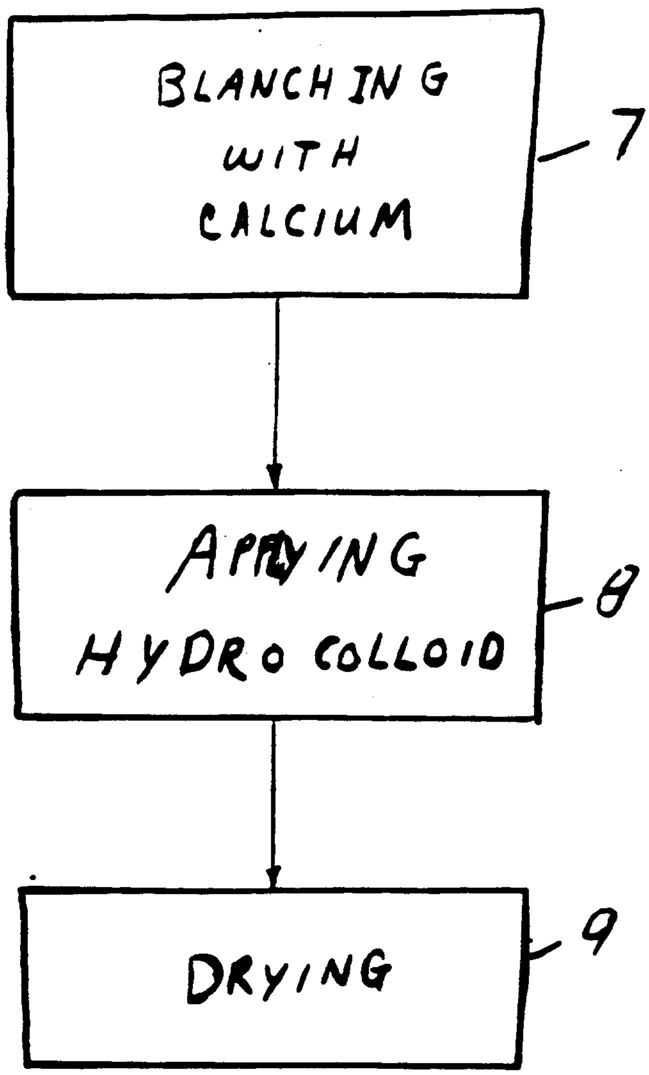


FIG. 2

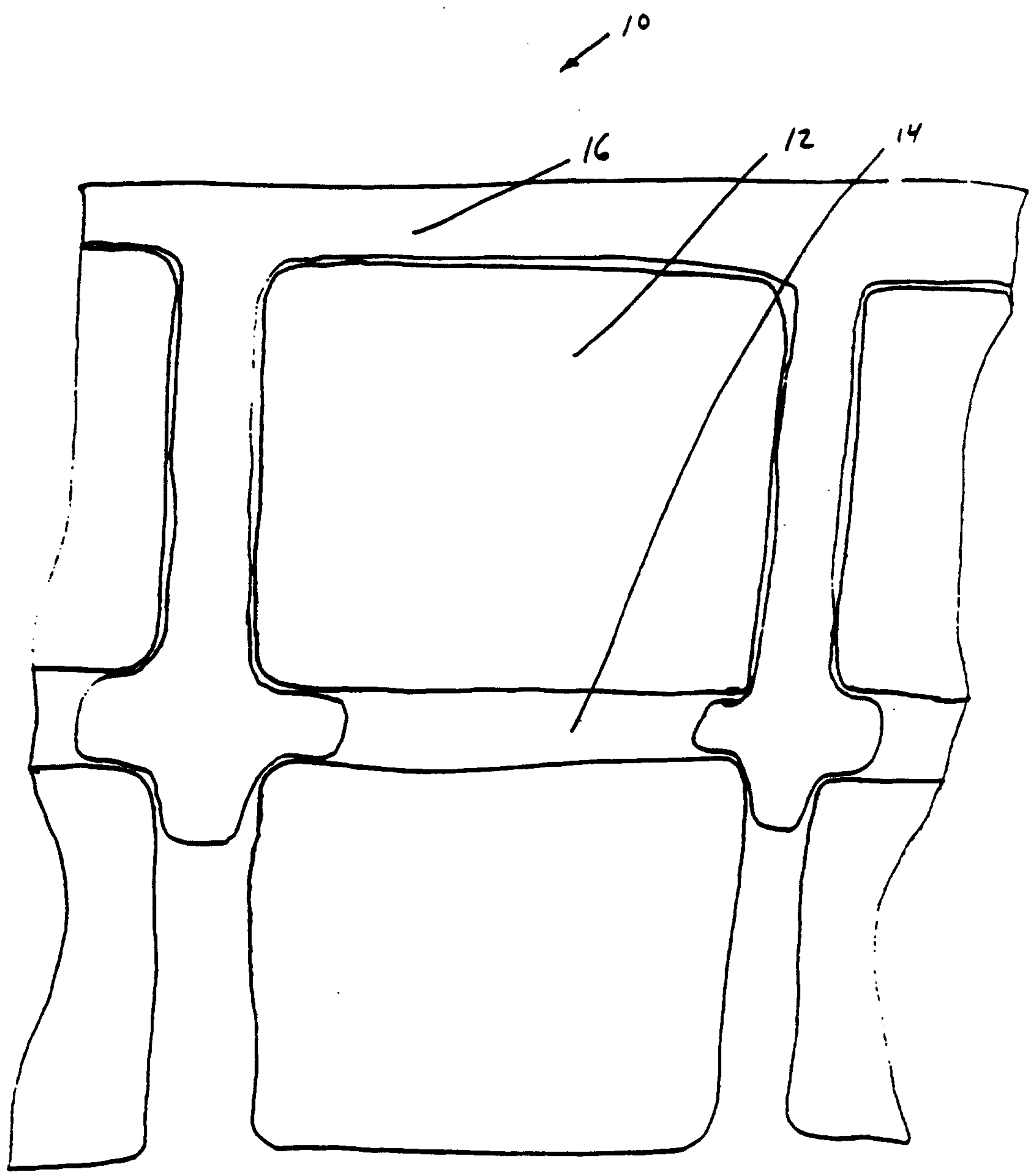


FIG. 3.